(19) Europäisches Patentamt
European Patent Office
Office européen des brevets

(11) **EP 2 142 338 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **08734935.3**

(22) Anmeldetag: **01.04.2008**

(51) Int Cl.:
***B23Q 17/22*** *(2006.01)*

(86) Internationale Anmeldenummer:
**PCT/EP2008/002583**

(87) Internationale Veröffentlichungsnummer:
**WO 2008/119549 (09.10.2008 Gazette 2008/41)**

(54) **VERFAHREN UND VORRICHTUNG ZUR WERKSTÜCKEINMESSUNG UND WERKSTÜCKBEARBEITUNG**

METHOD AND DEVICE FOR THE INITIAL MEASUREMENT OF A WORKPIECE, AND THE PROCESSING OF A WORKPIECE

PROCÉDÉ ET DISPOSITIF POUR EFFECTUER DES MESURES SUR DES PIÈCES ET LES USINER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.04.2007 DE 102007016056**

(43) Veröffentlichungstag der Anmeldung:
**13.01.2010 Patentblatt 2010/02**

(73) Patentinhaber: **Sauer GmbH Lasertec**
**87459 Pfronten (DE)**

(72) Erfinder:
• **HILDEBRAND, Peter**
**87459 Pfronten (DE)**

• **REINICKE, Gottfried**
**87439 Kempten (DE)**

(74) Vertreter: **Beetz & Partner**
**Patentanwälte**
**Steinsdorfstrasse 10**
**80538 München (DE)**

(56) Entgegenhaltungen:
**EP-A- 1 710 533       WO-A-2005/030437**
**DE-C1- 4 104 602      US-A1- 2003 004 606**
**US-A1- 2003 120 377**

**Beschreibung**

Die Erfindung betrifft ein Verfahren und eine Vorrichtung zur Werkstückeinmessung und zur Werkstückbearbeitung gemäß den Oberbegriffen der unabhängigen Patentansprüche. Ein solches Verfahren ist aus der US 6611731 und der WO2005/030437A1 bekannt.

Bei sehr genau arbeitenden numerisch gesteuerten Werkzeugmaschinen, z. B. einer Laserabtragsmaschine, können Fertigungsgenauigkeiten bis hin zu wenigen μm erzielt werden. Allerdings ist in der Regel eine so genaue Fertigung nur dann sinnvoll, wenn die Werkstückposition mindestens ähnlich genau festliegt, denn dann wird die sehr genaue Fertigung nach Maßgabe von Fertigungsdaten, die auf eine ideale Einspannung bezogen sind, nicht durch ein real gegenüber der idealen Einspannung translatorisch und/oder rotatorisch verschoben eingespanntes Werkstück konterkariert.

Letztlich ist es aber häufig nicht möglich, Werkstücke mechanisch so genau einzuspannen, dass sich nur solche Positionsungenauigkeiten ergeben, die im Hinblick auf die mögliche Fertigungspräzision hinnehmbar sind. Gerade rotatorische Verschiebungen wirken sich hier stark aus. Eine Verdrehung eines Werkstücks in der Einspannung um so wenig wie 0,01° würde bei einem Werkstück, das Teile 200 mm von der Einspannung entfernt aufweist, eine Verschiebung dieser entfernten Teile von ca. 35 μm aus der Idealposition heraus bewirken, was ein völlig unannehmbarer Wert ist.

Es wird deshalb so vorgegangen, dass das Werkstück möglichst genau eingespannt wird, dann in der Einspannung vermessen wird, um so translatorische und/oder rotatorische Verschiebungen des real eingespannten Werkstücks gegenüber einer idealen Einspannung ermitteln zu können, dann nach Maßgabe der ermittelten Verschiebungen die auf die ideale Einspannung bezogenen Fertigungsdaten numerisch auf die reale Position umgerechnet werden und dann ohne Änderung der Einspannung die Werkstückbearbeitung nach Maßgabe der geänderten Daten erfolgt. Letztlich wird also nicht das reale Werkstück zu den idealen Daten hingeführt, sondern andersherum die idealen Daten zum realen Werkstück. Auf diese Weise können Einspannungenauigkeiten in gewissem Umfang eliminiert werden.

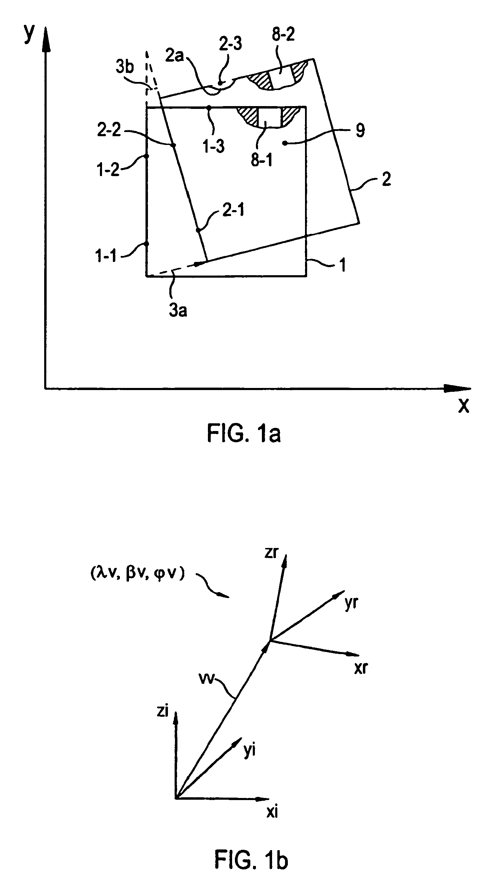

Fig. 1a zeigt die Verhältnisse schematisch im zweidimensionalen Schnitt gegenüber einem Maschinenkoordinatensystem x-y. Es wird ein Körper 9 (z. B. eine Turbinenschaufel) angenommen, der mit einem sehr genau zu fertigenden Loch 8 (z. B. einem Kühlmittelkanal) zu versehen ist. 1 bezeichnet die Oberfläche des Körpers in der idealen Einspannung, 8-1 das (zukünftige) Loch in der ideal eingespannten Lage. 2 ist dagegen die Oberfläche bei realer Einspannung, und hier befindet sich auch das (zukünftige) Loch 8-2 an einer verschobenen Position. Die translatorische Verschiebung ist bspw. an der Ecke unten links durch Pfeil 3a angedeutet, der einen Verschiebungsvektor mit x- und y-Komponente darstellt. Die rotatorische Verdrehung ist durch den Winkel 3b angedeutet.

Im dreidimensionalen Raum sind die Verhältnisse qualitativ die gleichen. Allerdings ist der Verschiebungsvektor eine dreidimensionale Größe, und man hat drei Winkelfreiheitsgrade rotatorischer Verschiebungen, mithin zusammen sechs Größen, die zu bestimmen sind.

Fig. 1b zeigt schematisch den Zusammenhang des idealen und des realen Koordinatensystems. Das System xi-yi-zi symbolisiert das ideale Koordinatensystem, das z. B. das Maschinenkoordinatensystem sein kann. Das System xr-yr-zr symbolisiert das reale Koordinatensystem. Letzteres ist gegenüber ersterem um den Versatzvektor vv = (xv, yv, zv) translatorisch versetzt und um mehrere Drehachsen um die Winkel λv, βv, φv rotatorisch versetzt. Der Zusammenhang zwischen einem Punkt/Vektor vi im idealen Koordinatensystem und einem Punkt/Vektor vr im realen Koordinatensystem kann mathematisch wie folgt vektoriell beschrieben werden:

$$\mathtt{vr \ = \ k \ * \ D(\lambda v, \ \beta v, \ \phi v) \ * \ vi \ + \ vv,}$$

wobei D(λv, βv, φv) bei dreidimensionaler Rechnung eine 3*3-Matrix, die die Drehungen bewirkt, und k ein Skalierungsfaktor sind. Gemäß der genannten Formel kann ein Koordinatenpunkt im idealen System in einen Punkt im realen System umgerechnet werden, wenn xv, yv, zv, λv, βv und φv bekannt sind. Vorteilhafterweise werden die Größen xv, yv, zv, λv, βv und φv bezüglich des idealen Koordinatensystems (Maschinenkoordinatensystem) beschrieben, denn dieses ist anfänglich bekannt. In diesem Zusammenhang wird darauf verwiesen, dass es eine Vielzahl von Darstellungsmöglichkeiten der Transformation zwischen realem und idealem Koordinatensystem gibt, insbesondere längs anderer translatorischer und rotatorischer Achsen. Diese können auch so gewählt werden, dass die Transformation mit weniger als den genannten sechs Parametern (3 translatorische (xv, yv, zv), 3 rotatorische (λv, βv, φv)) beschrieben werden kann. Aber dann müssen diese Achsen ermittelt und beschrieben werden, so dass der Aufwand nicht grundsätzlich sinkt, sondern sich lediglich ändert. Wenn im Werkstück oder in der vorzunehmenden Bearbeitung bestimmte Symmetrien vorliegen (z. B. bei einem kreiszylindrischen Bohrloch), kann allerdings tatsächlich eine geringere Zahl von Parametern zur Beschreibung der Transformation ausreichen.

Zur Bestimmung der translatorischen Verschiebung 3a und der rotatorischen Verdrehung 3b kann so vorgegangen werden, dass die reale Position mehrerer Referenzpunkte 2-1, 2-2, 2-3 des real eingespannten Körpers vermessen wird. Die Messwerte werden mit den erwarteten idealen Werten der Referenzpunkte 1-1, 1-2, 1-3 entsprechend der idealen Einspannung verglichen. So kann eine reale Position und Ausrichtung des Körpers bestimmt werden. Im Hinblick auf die bekannte ideale Position und Ausrichtung können dann die translatorische und rotatorische Verschiebung bestimmt werden, die dann auf die Fertigungsdaten angewendet werden können. Die eingangs genannte US-Patentschrift beschreibt ein solches Verfahren.

Das beschriebene Verfahren hat zwei Nachteile:

Zum einen wird man die Referenzpunkte bei deren Messung nie genau treffen, denn sie sind in der Regel nicht markiert, so dass ein Meßtaster sie nur aus ihren idealen Koordinaten heraus anfahren kann (denn die realen sind unbekannt), und so wird ein gemessener Fehler zumindest teilweise nicht durch eine fehlerhafte Einspannung bewirkt sondern durch Vermessen eines nicht ganz richtig getroffenen Referenzpunktes. Dieses Problem kann in gewisser Weise durch geschickte Wahl der Referenzpunkte und der Anfahrrichtungen der Punkte sowie durch entsprechende Auslegung des Algorithmus (z. B. Iteration bei großen Abweichungen) verringert werden. Das Verfahren wird dadurch aber umständlicher, und letztlich muß es für jedes Werkstück individuell eingerichtet werden.

Zum anderen kann es vorkommen, dass ein Referenzpunkt real nicht mehr existiert. Dies tritt besonders bei der Reparatur oder Überarbeitung von Werkstücken (z. B. Turbinenschaufeln) auf, die schon viele Betriebsstunden hinter sich haben und deshalb z. B. Abnutzung oder auch grobe mechanische Einwirkung (z. B. Vogelschlag) erfahren haben können, so dass aufgrund entstandener mehr oder minder großer Oberflächendefekte der Referenzpunkt verschwunden ist. Oberflächendefekte können auch Materialaggregationen sein, etwa wegen verdrückten Materials oder sonstiger Anlagerungen. Fig. 1a zeigt bei 2a eine Delle in der Oberfläche, und dementsprechend hängt der Referenzpunkt 2-3 "in der Luft" und steht zur Messung nicht mehr zur Verfügung. Wenn statt seiner dann in seiner Nähe (also z. B. am Boden der Delle 2a) doch etwas gemessen wird, wird etwas Falsches gemessen, und dementsprechend falsch sind dann die daraus hergeleiteten Werte.

Weiterer relevanter Stand der Technik findet sich in der DE 19631620 und DE 3119566.

Die WO 2005/030437A1 beschreibt eine Schleifmaschine mit Rundlaufkorrektur. Die Taumelbewegung eines rotierend eingespannten Werkstücks wird ermittelt und bei der Werkstückbearbeitung berücksichtigt.

Die EP1710533A1 beschreibt eine Messvorrichtung für Einspannfehler eines Werkstücks. Ausgegangen wird von einem Werkstück mit orthogonalen Flächen. sie werden vermessen. Aus den Messergebnissen werden translatorische und rotatorische Einspannungsfehler ermittelt.

Aufgabe der Erfindung ist es, ein zuverlässige Verfahren und Vorrichtungen zur Werkstückeinmessung anzugeben, die auch bei größeren Fehleinspannungen und bei nicht-ideal geformten Werkstücken zuverlässig arbeiten.

Diese Aufgabe wird mit den Merkmalen der unabhängigen Patentansprüche gelöst.

Bei einem Verfahren zur Werkstückeinmessung werden die idealen Oberflächendaten des Werkstücks translatorisch und rotatorisch bezüglich des Maschinenkoordinatensystems variiert und jeweils mit Messdaten vieler Oberflächenpunkte des real eingespannten Werkstücks verglichen. Die Variation, bei der ein geeignet bestimmter Gesamtfehler (Abweichungsmaß) minimal ist, kann als Ausgangspunkt für die translatorische und rotatorische Verschiebung des real eingespannten Werkstücks gegenüber der idealen Einspannung genommen werden. Es kann aber auch "andersherum" vorgegangen werden: Es können die gemessenen Daten der Oberfläche des real eingespannten Werkstücks translatorisch und/oder rotatorisch variiert werden und die so erzeugten Kandidatensätze mit den idealen Werkstückoberflächendaten verglichen werden.

Ein Verfahren zur Werkstückeinmessung hat die Schritte Einspannen des Werkstücks in einer Bearbeitungsmaschine, Vermessen der Lage des Werkstücks in der Einspannung, und Ermitteln eines translatorischen Versatzes $xv$, $yv$, $zv$ und eines rotatorischen Versatzes $\lambda s$, $\beta v$, $\varphi v$ der tatsächlichen Werkstückeinspannung gegenüber einer idealen Einspannung aus den Messergebnissen und aus einen anfänglichen Datensatz bildenden Werkstückdaten, die auf die ideale Einspannung bezogen sind, wobei eine Vielzahl von Oberflächenpunkten des eingespannten Werkstücks in ihrer räumlichen Lage $xn$, $yn$, $zn$ vermessen werden, um einen anderen anfänglichen Datensatz zu erhalten, die Daten eines der anfänglichen Datensätze nach Maßgabe mehrerer translatorischer und rotatorischer Verschiebungen mehrfach variiert werden, um mehrere variierte Datensätze zu erhalten, aus den variierten Datensätzen und dem ihnen zugrunde liegenden Datensatz derjenige Datensatz ermittelt wird, der eine Oberfläche mit einem geringsten Abweichungsmaß gegenüber einer Oberfläche repräsentiert, die von dem anderen der anfänglichen Datensätze repräsentiert wird, und der translatorische Versatzes $xv$, $yv$, $zv$ und der rotatorische Versatz $\lambda v$, $\beta v$, $\varphi v$ aus der translatorischen und rotatorischen Verschiebung des ermittelten Datensatzes ermittelt wird.

Bei der oben beschriebenen Variation eines der anfänglichen Datensätze kann ein "best fit"-Verfahren verwendet werden, um die Kandidaten-Datensätze zu erzeugen und im Hinblick auf den anderen anfänglichen Datensatz zu beurteilen.

3

Die Vermessung des eingespannten Werkstücks erfolgt gegenüber der mindest nötigen Datenmenge zur Bestimmung der translatorischen und rotatorischen Verschiebung mit Redundanz. Diese kann sehr hoch sein, bspw. der Faktor 10 oder 100. Es können damit auch bei realen Oberflächen realer Körper sehr gute Ergebnisse erzielt werden. Die Vermessung des Werkstücks in seiner realen Einspannung kann optisch, insbesondere steroskopisch erfolgen, ggf. auch bei besonderer Beleuchtung, z. B. Linienbeleuchtung vorzugsweise mittels eines abtastenden/scannenden Lasers.

Nachfolgend werden Ausführungsformen der Erfindung Bezug nehmend auf die Zeichnungen beschrieben, es zeigen:

Fig. 1    eine Darstellungen zum Stand der Technik und zur Erläuterung dort unerwünschter Effekte,
Fig. 2    schematisch eine Vorgehensweise nach der Erfindung,
Fig. 3    eine mögliche erste Ausführungsform der Fehlerbestimmung,
Fig. 4    eine mögliche besondere Variante der Fehlerbestimmung,
Fig. 5    eine Vorrichtung nach der Erfindung.

Allgemein bedeuten in dieser Beschreibung gleiche Bezugszeichen gleiche Komponenten. Merkmale, die hier beschrieben sind, sollen auch als miteinander kombinierbar beschrieben sein, soweit sie sich nicht gegenseitig ausschließen.

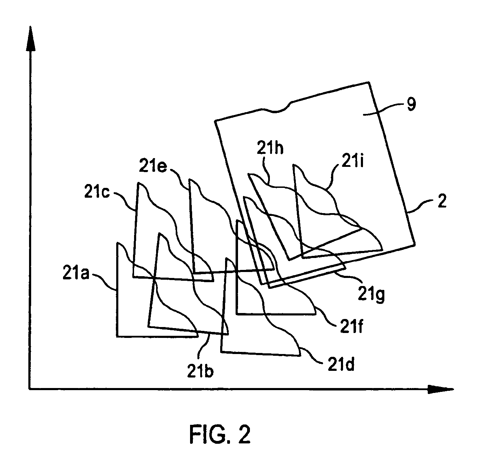

In Fig. 2 bezeichnen die x-y-Achsen ein fest auf die Maschine bezogenes Koordinatensystem, auf das Bezug nehmend auch das Werkzeug seine Arbeiten am Werkstück ausführt. Die Bearbeitungsdaten können auf dieses Koordinatensystem oder auf ein eindeutig damit korreliertes Koordinatensystem bezogen sein. Die Zeichnungen zeigen nur zwei Dimensionen. Die Erfindung ist aber als im dreidimensionalen Raum anwendbar anzusehen. Die Verschiebung eines Werkstücks kann insbesondere längs dreier translatorischer Freiheitsgrade (x, y, z) und längs dreier rotatorischer Freiheitsgrade ($\lambda$, $\varphi$, $\beta$) gegeben sein.

In Fig. 2 bezeichnen die Bezugsziffern 20-n verschiedene Variationen eines anfänglichen Datensatzes, im gezeigten Beispiel eines die Werkstückoberfläche repräsentierenden Datensatzes. Die Variationen können gemäß translatorischer und/oder rotatorischer Freiheitsgrade erfolgen. Sie können längs eines Freiheitsgrades (z. B. x-Achse) oder mehrerer Freiheitsgrade erfolgen. Die jeweilige Variation führt zu je einem eine Werkstückoberfläche in variierter Position repräsentierenden Datensatz.

Die so entstehenden variierten Positionen werden (einschließlich des Ausgansdatensatzes) jeweils für sich mit der gemessenen Position des Werkstücks verglichen, und es wird ein Gesamtfehlermaß (Abweichungsmaß) gebildet.

Es wird darauf verwiesen, dass nicht die gesamte Oberfläche in den Vergleich einbezogen werden muß. Teilbereiche können ausreichend sein. Der betrachtete Bereich wird allgemein so gewählt, dass sich in ihm jeder mögliche ggf. zu erfassende Positionsfehler hinreichend deutlich abbildet. Insbesondere kann der vermessene Bereich ein Bereich sein oder aufweisen, der von der Einspannung relativ weit entfernt ist (weiter als 70% oder 80% oder 90% der auf dem Werkstück maximal möglichen Entfernung). Dort bilden sich insbesondere rotatorische Fehler (Winkelversatz bei der Einspannung) deutlich ab.

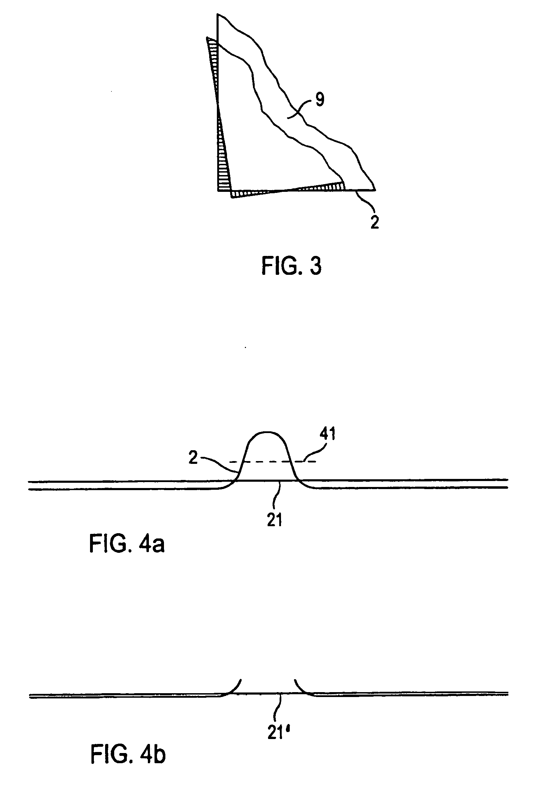

Die Fehlerermittlung kann z. B. wie in Fig. 3 angedeutet erfolgen, indem der Abstand eines Punktes auf der variierten Oberfläche von der gemessenen Oberfläche ermittelt wird. Die Abstände aller Punkte können als Beträge oder Quadrate aufsummiert werden und können so ein Fehler- oder Abweichungsmaß für eine Variation ergeben. Die Abstandsbestimmung kann in an sich einfacher mathematischer Weise z. B. durch Vektordarstellungen von Punkten, Oberflächen und Loten dazu und Lösen der sich daraus ergebenden Gleichungen erfolgen.

Innerhalb jedes Datensatzes können viele Punkte wie oben beschrieben ausgewertet werden, insbesondere mehr als n Punkte, n = 10 oder 50 oder 100 oder 200 oder 1.000 oder 5.000, die über den betrachteten Bereich der Oberfläche verteilt sein können. Es ergeben sich dann für eine Variation n Einzelfehler, die wie beschrieben zum Gesamtfehler der jeweiligen Variation verarbeitet werden können. Insgesamt entstehen so verschiedene Variationen, die jeweils aus bekannten translatorischen und rotatorischen Verschiebungen hervorgegangen sind und für die jeweils ein Fehlermaß existiert.

Es wird dann diejenige Variation herausgesucht, deren Fehlermaß das kleinste ist. Deren translatorische und rotatorische Verschiebung aus der Ausgangslage entspricht ausweislich des kleinsten Fehlermaßes am ehesten dem tatsächlichen translatorischen und rotatorischen Versatz des real eingespannten Werkstücks gegenüber einer ideal angenommenen Position und Ausrichtung. Somit kann nach Maßgabe der translatorischen und rotatorischen Verschiebung der Variation mit kleinstem Fehlermaß der translatorische und rotatorische Versatz des real eingespannten Werkstücks bestimmt werden. In einem einfachen Fall können translatorische und rotatorische Verschiebung der Variation mit kleinstem Fehlermaß unmittelbar (allenfalls vorzeichenkorrigiert, wenn die gemessene Oberfläche variiert und mit der idealen verglichen wurde) als translatorischer und rotatorischer Versatz des Werkstückes genommen werden. Es können aber auch Iterationen zur Anwendung kommen, was weiter unten beschrieben wird.

Die Variationen von Translation und Rotation können unzufällig bzw. gesteuert erfolgen, z. B. indem ihre Auswirkung auf den Fehler (Gesamtfehler, Abweichungsmaß) ausgewertet und zur Bestimmung einer weiteren Variation herangezogen wird. Wenn der Fehler durch Variation eines Fehlers kleiner wird, wird der Parameter in die gleiche Richtung weiter variiert, ansonsten in die entgegengesetzte. Wenn ein Fehlerminimum durchlaufen wurde, wird die bisherige Variation mit dem kleinsten Fehler genommen und ausgehend davon ein bisher nicht variierter Parameter variiert, insbesondere wie oben beschrieben. Wenn mehrere oder alle Parameter bzw. Freiheitsgrade $(x, y, z, \lambda, \beta, \varphi)$ auf diese Weise variiert wurden, kann ein weiterer Durchlauf der Variation der Parameter erfolgen, ggf. mit kleineren Schrittweiten.

Wenn ein Abbruchkriterium erfüllt ist (z. B. vorbestimmte Anzahl von Variationen/Iterationen, Fehler kleiner als ein gegebenes Maß), kann die translatorisch und rotatorische Verschiebung der Variation mit dem kleinsten Fehlermaß zur Bestimmung des Versatzes herangezogen werden.

Allgemein können Punkte auf Oberflächenbreichen der vermessenen Werkstückoberfläche mit Oberflächendefekten bei der oben beschriebenen Fehlerermittlung weggelassen werden. Denn Defekte führen zu großen, nicht einrichtbaren Fehlern, die die vermeintlich richtige Näherung systematisch in eine falsche Richtung "ziehen", was im Hinblick auf Fig. 4 erläutert wird. Dort zeigt in Fig. 4a Kurve einen Oberflächenbereich mit einem Defekt (Delle), und Linie zeigt eine vermeintlich gut genäherte Oberfläche, weil sie aufgrund der gewählten Fehlerbestimmung ein kleinstes Fehlermaß zeigt.

Gemäß Fig. 4b kann der defekte Oberflächenbereich (bzw. Punkte darauf) bei der Fehlerbestimmung weggelassen werden, und der Vergleich zwischen variierten Oberflächen(bereichen) und einer ursprünglichen Oberfläche findet ohne Einbeziehung von Punkte aus diesen weggelassenen Bereichen statt. Defekte Oberflächenbereiche können auf unterschiedliche Weise erkannt werden, etwa durch manuelle Eingabe, durch automatisch optische Erkennung oder durch Bewertung der Messdaten. Eine weitere Möglichkeit ist es, nach einer ersten Bestimmung von translatorischem und rotatorischem Versatz auf deren Grundlage die gemessene Oberfläche mit der idealen Oberfläche zu vergleichen und all diejenigen Bereiche der gemessenen Oberfläche wegzulassen, die ein bestimmtes Kriterium erfüllen, z. B. einen bestimmten absoluten oder relativen Abstand (im Vergleich zu anderen Bereichen) überschreiten. Auf der Grundlage der reduzierten Oberflächenbereiche wird dann das Variieren und Vergleichen im Sinne einer Iteration wiederholt.

Auf diese Weise bleiben Bereiche außerhalb der Betrachtung, die einen in eine falsche Richtung gezogenen oder gedrehten Versatz als richtig erscheinen lassen können.

Wenn wie oben beschrieben ein Oberflächendefekt erkannt wurde, können nach dessen Maßgabe ein Hinweis bzw. eine Warnung ausgegeben und/oder Bearbeitungsdaten variiert werden. Die Variation der Bearbeitungsdaten kann z. B. eine Verschiebung in der Weise umfassen, dass eine Verschiebung der Bearbeitungsstelle auf der Werkstückoberfläche eingerechnet wird, etwa um die Ausrichtung einer Bearbeitungsstelle auf der Oberfläche einzustellen. Die Variation kann aber auch bis hin zu kompletter Neuberechnung der vorzunehmenden Bearbeitung gehen.

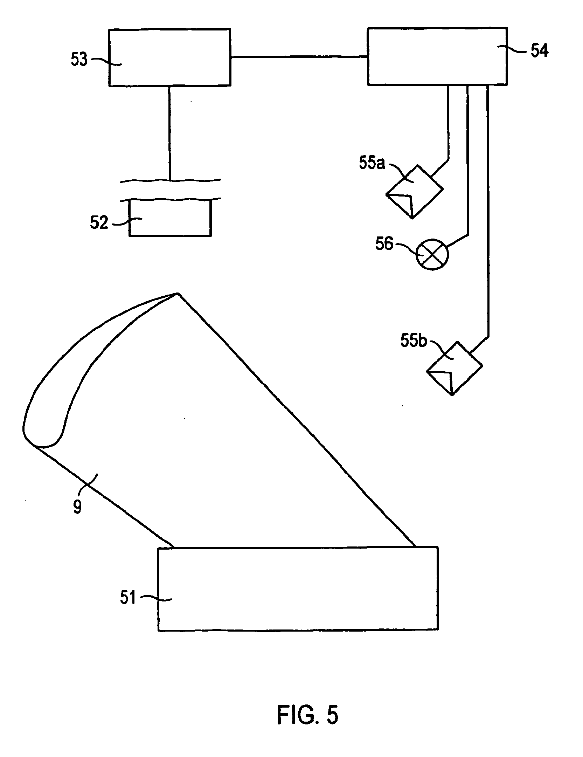

Fig. 5 zeigt eine Vorrichung zur Werkstückeinmessung und zur Werkstückbearbeitung. 52 ist das Werkzeug, z. B. eine Laserabtragsvorrichtung, das nach Maßgabe von Bearbeitungsdaten ein Werkstück 9 bearbeitet, beispielsweise bohrend oder schichtweise abtragend. Das Werkstück selbst ist in einer Einspannung 51 eingespannt.

55 symbolisiert eine Meßeinrichtung. Sie kann optisch arbeiten und einen optischen Aufnehmer aufweisen, z. B. eine geeignet auflösende Kamera. Sie kann stereoskopisch arbeiten und zwei oder mehr Aufnehmer 55a, 55b aufweisen, die das Werkstück aus unterschiedlichen Blickwinkeln aufnehmen. Es kann eine spezielle Beleuchtungseinrichtung 56 vorgesehen sein, insbesondere eine Linienbeleuchtung, z. B. ein Laser, die das Werkstück auch im interessierenden Bereich abscannen kann. Die gesamte optische Meßeinrichtung kann auch verfahrbar sein, um - womöglich auch gleiche Oberflächenbereiche - aus unterschiedlichen Blickwinkeln erfassen und so vermessen zu können. Die Anzahl der zuletzt gewonnenen Meßpunkte der Oberfläche des Werkstücks ist in gewissem Umfang wählbar bzw. einstellbar. Eine - nicht schmerzende - Obergrenze ist bei optischen Aufnehmern durch deren Auflösungsvermögen gegeben, womöglich auch durch Rechenzeiterwägungen. Statt optischer Aufnehmer sind auch andere Aufnehmer möglich, z. B. ein oder mehrere mehanische Punkttaster, die nacheinander die Oberfläche an der gewünschten Anzahl von Stellen abtasten. 54 symbolisiert eine Steuerung bzw. Regelung, die die Messwerte der Werkstückoberfläche ermittelt und ggf. geeignet formatiert. Bei optischen Meßeinrichtungen kann sie nach bestimmten Algorithmen aus den Bilddaten die Oberflächendaten im gewünschten Format extrahieren und diese einer Auswertung und Steuerung 53 zur Verfügung stellen. Letztere hat mehrere Aufgaben und dementsprechend Einrichtungen, nämlich Steuern der oben beschriebenen Variationen und Vornahme der Fehlerbeurteilungen, ggf. mit Iterationen etc., Ermittlung des Versatzes des real eingespannten Werkstücks gegenüber der idealen Einspannung, Modifizieren der Bearbeitungsdaten nach Maßgabe des ermittelten translatorischen und rotatorischen Versatzes, und Steuern der Werkstückbearbeitung nach Maßgabe des ermittelten Versatzes.

**Patentansprüche**

1. Verfahren zur Werkstückeinmessung, mit den Schritten
   Einspannen des Werkstücks in einer Bearbeitungsmaschine,

Vermessen der Lage des Werkstücks in der Einspannung,
Bereitstellen eines anfänglichen Datensatzes aus Werkstückdaten, die auf eine ideale Einspannung bezogen sind, und
Ermitteln eines translatorischen Versatzes (xv, yv, zv) und eines rotatorischen Versatzes (λv, βv, φv) der tatsächlichen Werkstückeinspannung gegenüber der idealen Einspannung aus den Messergebnissen und aus dem anfänglichen Datensatz,
**dadurch gekennzeichnet, daß**

(a) beim Vermessen der Lage eine Vielzahl von Oberflächenpunkten des eingespannten Werkstücks in ihrer räumlichen Lage (xn, yn, zn) vermessen werden, um einen weiteren anfänglichen Datensatz zu erhalten,
(b) mehrere variierte Datensätze erzeugt werden, indem die Daten eines der anfänglichen Datensätze nach Maßgabe mehrerer translatorischer und rotatorischer Verschiebungen mehrfach durch rechnerische Translation längs einer oder mehrerer translatorischer Achsen und/oder durch rechnerische Rotation um eine oder mehrere rotatorische Achsen variiert werden,
(c) mehrere Abweichungsmaße erzeugt werden, indem für jeden variierten Datensatz und den ihnen zugrunde liegenden anfänglichen Datensatz ein Abweichungsmaß für die von ihm jeweils repräsentierte Oberfläche gegenüber einer Oberfläche ermittelt wird, die von dem anderen der anfänglichen Datensätze repräsentiert wird,
(d) aus den verschiedenen Abweichungsmaßen das geringste Abweichungsmaß ermittelt wird, und
(e) beim Ermitteln des translatorischen und rotatorischen Versatzes der translatorische Versatz (xv, yv, zv) und der rotatorische Versatz (λu, βv, φv) aus der translatorischen und rotatorischen Verschiebung des Datensatzes ermittelt werden, zu dem das ermittelte geringste Abweichungsmaß gehört.

2. Verfahren nach Anspruch 1, **dadurch gekennzeichnet, daß** die translatorische und rotatorische Verschiebung des ermittelten Datensatzes als der translatorischen Versatz (xv, yv, zv) und der rotatorische Versatz (λv, βv, φv) genommen werden.

3. Verfahren nach Anspruch 1, **dadurch gekennzeichnet, daß**
im ermittelten Datensatz diejenigen Punkte ermittelt und eliminiert werden, die weiter als ein bestimmtes Maß von den durch die Werkstückdaten vorgegebenen Oberflächen entfernt sind,
dass in den anderen Datensätzen die den gelöschten Punkten entsprechenden Punkte ebenfalls eliminiert werden, mit den so entstandenen Datensätze die Schritte (c), (d) und (e) wiederholt werden.

4. Verfahren nach einem der vorherigen Ansprüche, **dadurch gekennzeichnet, daß** im Schritt (a) eine optische Messung vorgenommen wird.

5. Verfahren nach einem der vorherigen Ansprüche, **dadurch gekennzeichnet, daß** mindestens 10, vorzugsweise mindestens 30 Oberflächenpunkte vermessen werden.

6. Verfahren nach einem der vorherigen Ansprüche, **dadurch gekennzeichnet, daß** die Variation für die Ermittlung eines neuen Datensatzes nach Maßgabe eines oder mehrerer schon ermittelter Abweichungsmaße vorgenommen wird.

7. Verfahren nach einem der vorherigen Ansprüche, **dadurch gekennzeichnet, daß** der eine der anfänglichen Datensätze der Datensatz der Werkstückdaten ist, die auf die ideale Einspannung bezogen sind, und daß der andere der anfänglichen Datensätze der Datensatz der Werkstückdaten ist, die auf der Werkstückvermessung beruhen.

8. Verfahren nach einem der Ansprüche 1 bis 6, **dadurch gekennzeichnet, daß** der eine der anfänglichen Datensätze der Datensatz der Werkstückdaten ist, die auf der Werkstückvermessung beruhen, und daß der andere der anfänglichen Datensätze der Datensatz der Werkstückdaten ist, die auf die ideale Einspannung bezogen sind.

9. Verfahren zur Werkstückbearbeitung, mit
einer Werkstückeinmessung nach einem der vorherigen Ansprüche,
Verändern der Werkstückdaten, die auf die ideale Einspannung bezogen sind, nach Maßgabe des ermittelten translatorischen Versatzes (xv, yv, zv) und rotatorischen Versatzes (λv, βv, φv), und
Bearbeiten des Werkstücks nach Maßgabe der veränderten Werkstückdaten.

10. Vorrichtung zur Werkstückeinmessung, insbesondere zur Durchführung des Verfahrens nach einem der Ansprüche 1 - 8, mit

einer Einspannung (51) für das Werkstück in einer Bearbeitungsmaschine (50),
einer Vermessungsvorrichtung (54 - 56) zur Vermessung der Lage des Werkstücks in der Einspannung,
einer Einrichtung zur Bereitstellung eines anfänglichen Datensatzes aus Werkstückdaten, die auf eine ideale Einspannung bezogen sind, und
einer Ermittlungsvorrichtung (53) zum Ermitteln eines translatorischen Versatzes (xv, yv, zv) und eines rotatorischen Versatzes (λv, βv, φv) der tatsächlichen Werkstückeinspannung gegenüber der idealen Einspannung aus den Messergebnissen und aus dem anfänglichen Datensatz,
**dadurch gekennzeichnet, daß**

(a) die Vermessungsvorrichtung derart gestaltet ist, dass sie eine Vielzahl von Oberflächenpunkten des eingespannten Werkstücks in ihrer räumlichen Lage (xn, yn, zn) vermißt, um damit einen anderen anfänglichen Datensatz zu erhalten,
(b) die Ermittlungsvorrichtung eine Variationseinrichtung aufweist, die die Daten eines der anfänglichen Datensätze nach Maßgabe mehrerer translatorischer und rotatorischer Verschiebungen mehrfach durch rechnerische Translation längs einer oder mehrerer translatorischer Achsen und/oder durch rechnerische Rotation um eine oder mehrere rotatorische Achsen variiert, um mehrere variierte Datensätze zu erhalten,
(c) die Ermittlungsvorrichtung eine Abweichungsbestimmungseinrichtung aufweist, die für jeden variierten Datensatz und den ihnen zugrunde liegenden anfänglichen Datensatz ein Abweichungsmaß für die von ihm jeweils repräsentierte Oberfläche gegenüber einer Oberfläche ermittelt, die von dem anderen der anfänglichen Datensätze repräsentiert wird,
(d) die Ermittlungsvorrichtung eine Auswahleinrichtung aufweist, die aus den ermittelten Abweichungsmaßen das geringste Abweichungsmaße ermittelt, und
(e) die Ermittlungsvorrichtung eine Versatzbestimmungseinrichtung aufweist, die den translatorischen Versatz (xv, yv, zv) und den rotatorischen Versatz (λv, βv, φv) aus der translatorischen und rotatorischen Verschiebung des Datensatzes ermittelt, zu dem das ermittelte geringste Abweichungsmaß gehört.

11. Vorrichtung nach Anspruch 10, **dadurch gekennzeichnet, daß** die Vermessungsvorrichtung einen optischen Aufnehmer (55a, b) aufweist.

12. Vorrichtung nach Anspruch 10 oder 11, **dadurch gekennzeichnet, daß** die Vermessungsvorrichtung mehrere optische Aufnehmer aufweist, die an unterschiedlichen Orten angebracht sind und die verfahrbar sein können.

13. Vorrichtung zur Werkstückbearbeitung, mit einer Werkstückeinmeßvorrichtung nach einem der Ansprüche 10 - 12, einer Werkstückdatenveränderungseinrichtung, die ideale Bearbeitungsdaten (8-1) nach Maßgabe des ermittelten translatorischen Versatzes (xv, yv, zv) und des rotatorischen Versatzes (λv, βv, φv) in reale Bearbeitungsdaten (8-2) umrechnet, und einer Bearbeitungseinrichtung, die das Werkstück nach Maßgabe der realen Bearbeitungsdaten bearbeitet.

14. Vorrichtung nach Anspruch 13, **dadurch gekennzeichnet, daß** die Bearbeitungseinrichtung eine Laserbearbeitungseinrichtung ist.


**Claims**

1. A method for the initial measurement of a workpiece, comprising the steps of
mounting the workpiece in a machine tool,
measuring a position of the workpiece in its mounting, providing an initial data set from workpiece data related to an ideal mounting, and
determining a translatory offset (xv, yv, zv) and a rotatory offset (λv, βv, φv) of a real workpiece mounting in relation to an ideal mounting from the measurement results and from the initial data set,
**characterized in that**

(a) when the position is measured plural surface points of the mounted workpiece are measured in their position in space (xn, yn, zn) for obtaining another initial data set,
(b) plural varied data sets are generated by varying the data of one of the initial data sets in accordance with plural translatory and rotatory displacements a plurality of times by calculatory translation along one or more translatory axes and/ or by calculatory rotation about one or more rotatory axes,
(c) plural deviation measures are generated by determining a deviation measure for each varied data set and the initial data set on which they were based for the respective surface represented thereby in comparison to a surface represented by the other of the initial data sets,

(d) the lowest deviation measure is determined from the various deviation measures, and

(e) when the translatory offset and the rotatory offset are determined, the translatory offset (xv, yv, zv) and the rotatory offset ($\lambda$v, $\beta$v, $\varphi$v) are determined from the translatory and rotatory displacements of the data set having the lowest deviation measure.

2. The method according to claim 1, **characterized in that** the translatory and rotatory displacement of the determined data set is taken as the translatory offset (xv, yv, zv) and the rotatory offset ($\lambda$v, $\beta$v, $\varphi$v).

3. The method according to claim 1, **characterized in that**

in the determined data set those points are determined and eliminated which are more than a predetermined value distant from the surface given by the workpiece data,

in the other data sets the points corresponding to the eliminated points are likewise eliminated,

with the so generated data sets the steps (c), (d) and (e) are repeated.

4. The method according to any one of the preceding claims, **characterized in that** an optical measurement is made in step (a).

5. The method according to any one of the preceding claims, **characterized in that** at least 10, preferably at least 30 surface points are measured.

6. The method according to any one of the preceding claims, **characterized in that** the variation for determining a new data set is made in accordance with one or more already determined deviation measures.

7. The method according to any one of the preceding claims, **characterized in that** the one of the initial data sets is the data set of the workpiece data referenced to the ideal mounting, and that the other of the initial data sets is the data set of the workpiece data based on the workpiece measurement.

8. The method according to any one of claims 1 to 6, **characterized in that** the one of the initial data sets is the data set of the workpiece data based on the workpiece measurement, and that the other of the initial data sets is the data set of the workpiece data referenced to the ideal mounting.

9. A method for workpiece machining, comprising

an initial measurement of a workpiece according to any one of the preceding claims,

changing the workpiece data referenced to the ideal mounting in accordance with the determined translatory offset (xv, yv, zv) and the rotatory offset ($\lambda$v, $\beta$v, $\varphi$v), and

machining the workpiece in accordance with the changed workpiece data.

10. A device for the initial measurement of a workpiece, in particular for performing the method according to any one of claims 1 to 8, comprising

a mounting (51) for the workpiece in a machine tool (50),

a measuring means (54 - 56) for measuring the position of the workpiece in the mounting,

means for providing an initial data set from workpiece data referenced to the ideal mounting, and

a determining device (53) for determining a translatory offset (xv, yv, zv) and a rotatory offset ($\lambda$v, $\beta$v, $\varphi$v) of the real workpiece mounting compared to an ideal mounting from the measurement results and from the initial data set,

**characterized in that**

(a) the measuring means is adapted such that it measures plural surface points of the mounted workpiece in their position in space (xn, yn, zn) for obtaining another initial data set,

(b) the determining means comprises a varying means varying the data of one of the initial data sets in accordance with plural translatory and rotatory displacements a plurality of times by calculatory translation along one or more translatory axes and/or by calculatory rotation about one or more rotatory axes to obtain plural varied data sets,

(c) the determining means comprises a deviation determining means determining for each varied data set and the initial data set on which they were based a deviation measure for the respective surface represented thereby in comparison to a surface represented by the other of the initial data sets,

(d) the determining means comprises a selecting means which determines from the determined deviation measures the lowest deviation measure, and

(e) the determining means comprises an offset determining means determining the translatory offset (xv, yv, zv) and the rotatory offset (λv, βv, φv) from the translatory and rotatory displacements of the data set having the lowest deviation measure.

**11.** The device according to claim 10, **characterized in that** the measuring means comprises an optical pickup (55a, b).

**12.** The device according to claim 10 or 11, **characterized in that** the measuring means comprises plural optical pickups mounted to different locations which may be displaceable.

**13.** A device for machining a workpiece, comprising a workpiece measuring means according to any one of claims 10 - 12, a workpiece data change means transforming the ideal machining data (8-1) in accordance with the determined translatory offset (xv, yv, zv) and the rotatory offset (λv, βv, φv) into real machining data (8-2), and a machining device working the workpiece in accordance with the real machining data.

**14.** The device according to claim 13, **characterized in that** the machining means is a laser machining means.

**Revendications**

**1.** Procédé de mesure initiale d'une pièce à usiner, comprenant les étapes consistant à :

serrer la pièce à usiner dans une machine à usiner,
mesurer la position de la pièce à usiner dans le serrage,
préparer un jeu de données initial à partir des données concernant la pièce à usiner, qui font référence à un serrage idéal, et
déterminer un décalage de translation (xv, yv, zv) et un décalage de rotation (λv, βv, φv) du serrage réel de la pièce à usiner par rapport au serrage idéal à partir des résultats de mesure et du jeu de données initial, **caractérisé en ce que**

(a) pour la mesure de la position de la pièce, la position spatiale (xn, yn, zn) d'une multitude de points de surface de la pièce à usiner serrée est mesurée afin d'obtenir un autre jeu de données initial,
(b) plusieurs jeux de données modifiés sont produits en faisant varier plusieurs fois les données d'un des jeux de données initiaux en fonction de plusieurs décalages de translation et de rotation par translation mathématique le long d'un ou de plusieurs axes de translation et/ou par rotation mathématique autour d'un ou de plusieurs axes de rotation,
(c) plusieurs grandeurs d'écart sont produites en déterminant, pour chaque jeu de données modifié et le jeu de données initial à la base de celui-ci, une grandeur d'écart pour la surface qu'il représente à chaque fois par rapport à une surface que représente l'autre jeu de données initial,
(d) la grandeur d'écart la plus faible est déterminée à partir des diverses grandeurs d'écart, et
(e) pour la détermination du décalage de translation et de rotation, le décalage de translation (xv, yv, zv) et le décalage de rotation (λv, βv, φv) sont déterminés à partir du décalage de translation et de rotation du jeu de données auquel appartient la grandeur d'écart déterminée la plus faible.

**2.** Procédé selon la revendication 1, **caractérisé en ce que** le décalage de translation et de rotation du jeu de données déterminé est pris comme décalage de translation (xv, yv, zv) et décalage de rotation (λv, βv, φv).

**3.** Procédé selon la revendication 1, **caractérisé en ce que**
dans le jeu de données déterminé, les points dont l'éloignement par rapport aux surfaces prédéfinies par les données concernant la pièce à usiner est supérieur à une certaine grandeur sont calculés et éliminés,
dans les autres jeux de données, les points correspondant aux points supprimés sont également éliminés,
les étapes (c), (d) et (e) sont répétées avec les jeux de données ainsi obtenus.

**4.** Procédé selon l'une des revendications précédentes, **caractérisé en ce que** l'on réalise une mesure optique à l'étape (a).

**5.** Procédé selon l'une des revendications précédentes, **caractérisé en ce que** l'on mesure au moins 10, de préférence au moins 30 points de surface.

**6.** Procédé selon l'une des revendications précédentes, **caractérisé en ce que** la variation pour la détermination d'un nouveau jeu de données est réalisée d'après une ou plusieurs grandeurs d'écart déjà déterminées.

**7.** Procédé selon l'une des revendications précédentes, **caractérisé en ce que** l'un des jeux de données initiaux est le jeu de données des données concernant la pièce à usiner qui font référence au serrage idéal et que l'autre jeu de données initial est le jeu de données des données concernant la pièce à usiner qui reposent sur la mesure de la pièce à usiner.

**8.** Procédé selon l'une des revendications 1 à 6, **caractérisé en ce que** l'un des jeux de données initiaux est le jeu de données des données concernant la pièce à usiner qui reposent sur la mesure de la pièce à usiner et **en ce que** l'autre jeu de données initial est le jeu de données des données concernant la pièce à usiner qui font référence au serrage idéal.

**9.** Procédé d'usinage d'une pièce à usiner, comprenant
une mesure initiale de la pièce à usiner d'après l'une des revendications précédentes,
la modification des données concernant la pièce à usiner qui font référence au serrage idéal, en fonction du décalage de translation (xv, yv, zv) et du décalage de rotation (λv, βv, φv) déterminés, et
l'usinage de la pièce à usiner d'après les données concernant la pièce à usiner modifiées.

**10.** Dispositif de mesure initiale d'une pièce à usiner, en particulier pour la réalisation du procédé selon l'une des revendications 1 à 8, comprenant
un serrage (51) pour la pièce à usiner dans une machine d'usinage (50),
un dispositif de mesure (54 - 56) pour la mesure de la position de la pièce à usiner dans le serrage,
un système pour la confection d'un jeu de données initial à partir des données concernant la pièce à usiner qui font référence à un serrage idéal, et
un dispositif de détermination (53) permettant de déterminer un décalage de translation (xv, yv, zv) et un décalage de rotation (λv, βv, φv) du serrage réel de la pièce à usiner par rapport au serrage idéal à partir des résultats de mesure et à partir du jeu de données initial,
**caractérisé en ce que**

(a) le dispositif de mesure est conçu de manière à mesurer la position spatiale (xn, yn, zn) d'une multitude de points de surface de la pièce à usiner serrée afin obtenir ainsi un autre jeu de données initial,
(b) le dispositif de détermination présente un système de variation qui permet de faire varier plusieurs fois les données d'un des jeux de données initiaux en fonction de plusieurs décalages de translation et de rotation par translation mathématique le long d'un ou de plusieurs axes de translation et/ou par rotation mathématique autour d'un ou de plusieurs axes de rotation afin d'obtenir plusieurs jeux de données modifiés,
(c) le dispositif de détermination présente un système de détermination de l'écart qui détermine, pour chaque jeu de données modifié et le jeu de données initial à la base de celui-ci, une grandeur d'écart pour la surface qu'il représente à chaque fois par rapport à une surface que représente l'autre jeu de données initial,
(d) le dispositif de détermination présente un système de sélection qui détermine la grandeur d'écart la plus faible à partir des grandeurs d'écart déterminées et
(e) le dispositif de détermination présente un système de détermination du décalage qui détermine le décalage de translation (xv, yv, zv) et le décalage de rotation (λv, βv, φv) à partir du décalage de translation et de rotation du jeu de données auquel appartient la grandeur d'écart déterminée la plus faible.

**11.** Dispositif selon la revendication 10, **caractérisé en ce que** le dispositif de mesure comprend un récepteur optique (55a, b).

**12.** Dispositif selon la revendication 10 ou 11, **caractérisé en ce que** le dispositif de mesure comprend plusieurs récepteurs optiques, qui sont disposés à différents endroits et peuvent être mobiles.

**13.** Dispositif d'usinage d'une pièce à usiner, comprenant un dispositif de mesure initial de la pièce à usiner selon l'une des revendications 10 à 12, un système de modification des données concernant la pièce à usiner, qui convertit les données d'usinage idéales (8-1) en fonction du décalage de translation (xv, yv, zv) et du décalage de rotation (λv, βv, φv) déterminés en données d'usinage réelles (8-2), et un système d'usinage qui usine la pièce à usiner d'après les données d'usinage réelles.

**14.** Dispositif selon la revendication 13, **caractérisé en ce que** le système d'usinage est un système d'usinage laser.

FIG. 1a

FIG. 1b

FIG. 2

FIG. 3

FIG. 4a

FIG. 4b

**FIG. 5**

EP 2 142 338 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6611731 B
- WO 2005030437 A1
- DE 19631620
- DE 3119566
- EP 1710533 A1